(19) Europäisches Patentamt
European Patent Office
Office européen des brevets

(11) Publication number: 0 205 575 B1

(12) EUROPEAN PATENT SPECIFICATION

(45) Date of publication of patent specification: 23.01.91

(51) Int. Cl.[5]: B 01 J 41/14, C 08 F 8/32

(21) Application number: 86900492.9

(22) Date of filing: 13.12.85

(86) International application number: PCT/US85/02463

(87) International publication number: WO 86/03988 17.07.86 Gazette 86/17

# (54) HIGH CAPACITY, OXIDATIVELY STABLE POLYAMINE ION EXCHANGE RESINS AND PROCESS FOR PREPARATION THEREOF.

(30) Priority: 31.12.84 US 687664

(43) Date of publication of application: 30.12.86 Bulletin 86/52

(45) Publication of the grant of the patent: 23.01.91 Bulletin 91/04

(84) Designated Contracting States: BE DE FR GB IT NL

(56) References cited:
GB-A- 896 007
GB-A-1 050 207
US-A-2 304 637
US-A-2 675 359
US-A-2 862 894

Reactive Polymers, no. 3, 2 March 1984, Elsevier Publishers, Amsterdam, (NL) Bolto: "Polyamine ion-exchange resins from polyepichlorohydrin: resins with improved resistance to oxydation", pages 209-222, see pages 209-210

The file contains technical information submitted after the application was filed and not included in this specification

(73) Proprietor: THE DOW CHEMICAL COMPANY
2030 Dow Center Abbott Road P.O. Box 1967
Midland Michigan 48640-1967 (US)

(72) Inventor: STAHLBUSH, James, R.
1208 W. Carpenter Street
Midland, MI 48640 (US)
Inventor: TOMALIA, Donald, A.
463 W. Chippewa River Road
Midland, MI 48640 (US)

(74) Representative: Casalonga, Axel et al
BUREAU D.A. CASALONGA - JOSSE
Morassistrasse 8
D-8000 München 5 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to ion exchange resins, and to a process for preparing such resins.

Copolymer particles or beads prepared from polymerized monomers of mono- and polyethylenically unsaturated monomers are converted to anion exchange resins or beads using various techniques. For example, weak base resins can be prepared by haloalkylating poly(vinyl aromatic) copolymer beads and subsequently functionalizing the haloalkylated copolymers.

Methods for haloalkylating the cross-linked addition copolymers, as well as haloalkylating agents, included in such methods are disclosed, for example, in U.S. Patent Nos. 2,642,417; 2,960,480; 2,597,492; 2,597,493; 3,311,602 and 2,616,817 and *Ion Exchange* by F. Helfferich, published in 1962 by McGraw Hill Book Co., New York. Typically, the haloalkylating reaction involves swelling the cross-linked addition copolymer (e.g., cross-linked polystyrene) with a haloalkylating agent (e.g., bromomethylmethyl ether, chloromethylmethyl ether, or a mixture of formaldehyde and hydrochloric acid) and reacting the mixture in the presence of a Friedel-Crafts catalyst such as zinc chloride, iron chloride and aluminum chloride.

Generally, ion exchange beads are prepared from the haloalkylated bead by contacting said bead with a compound capable of displacing the halogen of the haloalkyl group and which, upon reaction, forms an active ion exchange group. Such compounds and methods for preparing ion exchange resins therefrom (i.e., weak base resins and strong base resins) are well known in the art and U.S. Patent Nos. 2,632,000; 2,616,877; 2,642,417; 2,63,001; 2,992,544 and F. Helfferich *supra* are illustrative thereof. Typically, a weak base resin is prepared by contacting the haloalkylated copolymer with ammonia, a primary amine or a secondary amine, or polyamines such as ethylene diamine, 1,2-propylene diamine, and the like. Representative primary and secondary amines include the methyl amine, ethyl amine, buty amine, cyclohexyl amine, dimethyl amine, diethyl amine and the like, as well as various polyamines. Strong base ion exchange resins are prepared using tertiary amines such as trimethyl amine, triethyl amine, tributyl amine, dimethylisopropanol amine, ethylmethylpropyl amine, dimethylamino ethanol, or the like as aminating agents.

Amination generally comprises heating a mixture of the haloalkylated copolymer beads and at least a stoichiometric amount of the aminating agent, (i.e., ammonia or the amine) to a temperature sufficient to displace the halogen atom attached to the carbon atom α to the aromatic nucleus of the polymer with aminating agent. A reaction medium such as water, ethanol, methanol, methylene chloride, ethylene dichloride, dimethoxymethylene, or combinations thereof is optionally, but advantageusly employed. Conventionally, amination is carried out at conditions such that anion exchange sites are uniformly dispersed throughout the entire bead. Typically, resins prepared from dimethylamine exhibit wet capacities of 1.6 meq/ml, dry capacities of 4.5 meq/g, and operational capacity values of 1.1 meq/ml at a flow rate of 15 bed volumes per hour using a 500 ppm HCl/500 ppm $H_2SO_4$ feed solution. See also, Pepper et al., *J. Chem. Soc.,* 4097 (1953); Shambhu et al., *J. Polm. Sci., Polm. Chem. Ed.,* Vol 15, 525 (1977); U.S. Patent Nos. 3,549,562 and 4,155,540; and British Patent No. 1,050,207.

Unfortunately, know processes for preparing anion exchange resins do not efficiently and effectively provide as high capacity resins which are also resistant to oxidation. In view of this deficiency, it would be highly advantageous to provide an improvement in the process for preparing anion exchange resins, and the product prepared therefrom having a high anion exchange capacity and particularly a high weak base capacity, which are highly resistant to oxidation.

The present invention, is a polymer matrix comprising weak base functionalities wherein said weak base functionalities are attached to said polymer matrix through a nitrogen atom of a 1,X-polyamino-alyleneamine functionality, characterized in that

a) the polymer matrix is a crosslinked copolymer of monovinyl aromatic compounds and polyvinyl compounds and

b) said 1,X-polyaminoalkyleneamine is represented by the general formula:

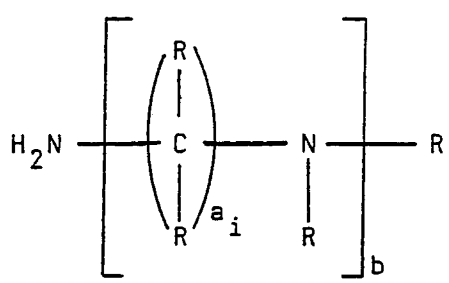

wherein $1 \leq i \leq b$

wherein each R is independently at each occurence hydrogen, alkyl, alkylene amine, alkylene hydroxide or alkylene sulfide, and when b is equal to one, $a_i$ is 3 to 5; when b is greater than one, $a_i$ is greater or equal to 2 and at least one $a_i$ is 3 to 5.

The aforementioned polymer matrix comprising weak base functionalities is useful as a weak base ion exchange resin.

In another aspect, the present invention is a process for preparing weak base ion exchange resins, which process comprises contacting a polymer maxtrix having haloalkyl functionalities with a 1,X-polyaminoalkylene amine in the presence of a solvent in an amount of from 0 to 20 times that of the volumes of said 1,X-polyaminoalkyleneamine at a temperature of from 0°C to 150°C, characterized in that a) the polymer matrix is a crosslinked copolymer of monovinyl aromatic compounds and polyvinyl compounds b) said 1,X-polyaminoalkyleneamine is represented by the general formula:

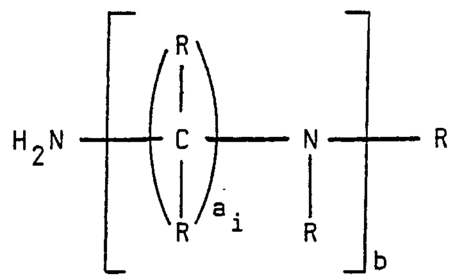

wherein $1 \leq i \leq b$
wherein each R is independently at each occurence hydrogen, alkyl, alkylene amine, alkylene hydroxide or alkylene sulfide, and when b is equal to one, $a_i$ is 3 to 5; when b is greater than one, $a_i$ is greater or equal to 2 and at least one $a_i$ is 3 to 5.

The weak base ion exchange resins of this invention exhibit both a high weak base capacity and high resistance to oxidation. The resins have excellent wet volume capabilities, dry weight capacities and operating capacities. In additon, the weak base resins of this invention exhibit fairly high densities and low swelling values upon conversion from the free base form to acid form in the resin.

The process of this invention allows the skilled artisan to provide high capacity anion exchange resins which are resistant to oxidation. Of particular interest is the production of weak base resins, and especially, weak base macroporous resins where the weak base component of the resin can be maximized. The process of this invention provides the skilled artisan with an efficient and effective means for preparing anion exchange resins.

The weak base resins of the invention are useful in the processing of various sugars, in water treatment and purification, and in precious metal recovery processing.

Copolymer particles useful in this invention are advantageously those prepared from suspension polymerizable ethylenically unsaturated monomers. Suitable copolymer particles and methods of preparation of such are disclosed in U.S. Patent Nos. 4,444,961; 3,716,482; 3,549,562; 4,382,124; 4,104,209; 4,419,245 and 3,418,262.

The copolymer particles are haloalkylated using generally known techniques. Such methods for haloalkylating copolymer particles, haloalkylating agents, and the like are disclosed in the aforementioned U.S. Patent Nos. 2,642,417; 2,960,480; 2,597,492; 3,311,602 and 2,616,817, as well as F. Helfferich, *supra*.

The reaction medium can vary and is any medium which the resulting ion exchange resin bead can be separated from while allowing for functionalization of the ion exchange resin. Examples of suitable reaction medium constituents include aqueous liquids, ethanol, methanol, methylene chloride, ethylene dichloride, dimethoxy methylene, and the like, or combinations thereof.

1,X-Polyaminoalkyleneamines have more than one amine functionality and at least three carbon atoms that separate each amine functionality and can be represented by the general formula

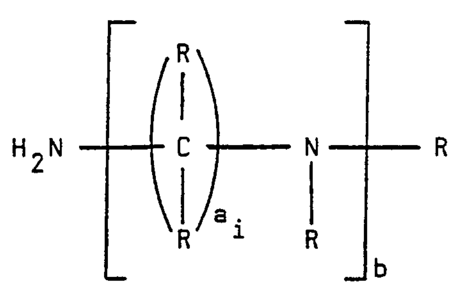

where $1 \leq i \leq b$
wherein each R is independently at each occurence hydrogen, alkyl, alkylene amine, alkylene hydroxide or alkylene sulfide, and when *b* is equal to one, $a_i$ is 3 to 5; when *b* is greater than one, $a_i$ is greater than or equal to 2 and at least one $a_i$ is 3 to 5, *b* is preferably 1 to 3.

Preferably, R is hydrogen or methyl.

Examples of suitable 1,X-polyaminoalkyleneamines compounds of this invention include 1,3-diaminopropane, 3,3'-iminobispropylamine, 1,4-diaminobutane, 2,4-diamino-2-methylpentane, and the like.

The weak base resins can be characterized as having the following properties. For example, the resin should have a wet volume capacity greater than 1.5 meq/ml, and/or dry weight capacities greater than 4.5

meq/g, and/or an operating capacity greater than 1.1 meq/ml at a flow rate of 15 bed volumes per hour using a 500 ppm HCl/500 ppm H2SO4 feed solution. The resin typically retains greater than 80 percent of its operating capacity after 2 weeks at 90°C in aerated water. The properties of resins of this invention exhibit a combination of properties (such as high weak base capacity and resistance to oxidation) which are superior to resins prepared from 1,2-alkylene amines.

The amount of haloalkylated functionalities relative to the polyaminoalkylene amine (e.g., polyamine) which is employed can vary. Preferably, it is desirable to employ enough polyamine such that the resin which is produced does not have a low weak base capacity. Thus, it is preferable to employ a mixture comprising at least one amine functionality per haloalkylated functionality, more preferably greater than 1.3 amine functionalities per mole of haloalkylated functionality. For example, if 1,3-diaminopropane and polymerized benzyl chloride functionalities are contacted it is most desirable to employ at least 0.5 moles of 1,3-diaminopropane per mole of benzyl chloride functionality.

The process of this invention involves dispersing the polymer matrix (e.g., haloalkylated copolymer particles) in the polyamine, with or without the necessity of a solvent. Typically, a solvent such as water (or more preferably methanol) is employed in amounts which vary, but preferably range from 0 to 20, more preferably 0 to 3 times that of the volumes of the polyamine which is employed. The mixture is subjected to reaction conditions such as heating for the desired reaction time. The temperature of the mixture before reaction can range from 0°C to 100°C, preferably from 35°C to 70°C; while the temperature of the mixture during reaction can range from 0°C to 150°C, preferably 70°C to 110°C. The reaction time can vary, and typically ranges from 5 minutes to 3 days, preferably 1 to 5 hours. The mixture is cooled and the resin is washed. Caustic or soda ash can be added to the reaction mixture in order to neutralise acids such as hydrochloric acid which can be generated during reaction. Typically, the amount of caustic which is employed ranges from 0 to 1.2 moles per mole of haloalkylated functionality. If desired, the resin can be converted to free base form during washing using a basic material such as caustic, soda ash or ammonia.

The following example is presented to further illustrate this invention. All parts are by weight unless otherwise indicated.

## Example 1

A macroporous chloromethylated copolymer was prepared using the procedures described in British Patent No. 1,050,207. The copolymer was prepared employing divinylbenzene, isooctane diluent and styrene as starting materials.

To 500 g of 1,3-diaminopropane which was heated to 66°C was added 49.3 g of the dry copolymer. The temperature of the mixture increased to 82°C within 10 minutes and was held at 80°C for an additional 115 minutes. The solution was cooled and washed with water, then with 1 N NaOH, and then backwashed with water. The product is designated as Sample No. 1.

For comparison purposes and in a similar manner were prepared resins from (a) ethylenediamine and the aforementioned macroporous copolymer and (b) aminoethylpiperazine and the aforementioned chloromethylated macroporous copolymer. The samples are designated as Sample Nos. C-1 and C-2 respectively.

Properties of the samples are presented in Table I.

TABLE I

| Sample No. | Wet Capacity (meq/ml) | | Dry Capacity (meq/g) | Percent Swell Base to HCl Form | Free Density (g/ml) | Water Retention Capacity (Percent) | Operational[(1)] Capacity Before Oxidation | | Operational[(1)] Capacity After Oxidation | |
|---|---|---|---|---|---|---|---|---|---|---|
| | Weak | Strong | | | | | $NH_4OH$ | NaOH | $NH_4O$ | NaOH |
| 1 | 2.49 | 0.046 | 5.80 | 20.4 | 1.085 | 36.2 | 1.89 | 1.92 | 1.86 | 1.84 |
| C-1* | 2.63 | 0.067 | 6.18 | 26.4 | 1.086 | 37.2 | 1.96 | 2.10 | 1.04 | 1.07 |
| C-2* | 2.09 | 0.088 | 4.94 | 11.2 | 1.090 | 37.3 | 1.01 | 0.98 | 0.72 | 0.68 |

* Not an example of the invention.

[1] Reported in milliequivalents acid per milliliter. Operational capacities are determined by converting the resin to free base form using either 1N $NH_4OH$ or 1N NaOH as regenerants. A feed solution of 500 ppm HCl/500 ppm $H_2SO_4$ was pumped through the column at 24 bed volumes/hour and the conductivity and pH of the eluent was measured and recorded. The operational capacity was determined by measuring the acid taken up by the resin until the eluent has a resistance of 20,000 ohms·m. Oxidative stability of the resins was determined by placing 100 ml of wet resin in 200 ml of aerated water at 90°C for 2 weeks. The operational capacity after aeration was determined above.

The data in Table I illustrates the good wet capacity, dry capacity, low swelling, high density and high operational capacity of Sample No. 1 which is at least comparable to Sample Nos. C-1 and C-2. However, the operational capacities of the resins after aeration clearly illustrate the Sample No. 1 exhibits surprisingly little decrease in operational capacity as compared to Sample Nos. C-1 and C-2. Thus, the weak base resins prepared according to the process of Applicant's invention are clearly more resistant to oxidation than those resins prepared from other polyamines.

Example 2

A macroporous chloromethylated copolymer is prepared using the procedure described in British Patent No. 1,050,207. The copolymer is prepared employing divinylbenzene, isooctane diluent and styrene as starting materials.

The chloromethylated copolymer (75.6 g) and 180 g of dimethoxymethane were stirred in a pressure vessel for one hour. The mixture was heated to 45°C then 135 g of 1,3-diaminopropane was added. The mixture was heated to 90°C and held there for two hours. The mixture was cooled then the resin separated from the solution. The resin was washed with water, then 1N HCl, then water than 1N NaOH and finally water.

Example 3

A macroporous chloromethylated copolymer is prepared using the procedure described in British Patent No. 1,050,207. The copolymer is prepared employing divinylbenzene, isooctane diluent and styrene as starting materials.

To 100 g of 1,4-diaminobutane which was warmed to 28°C was added to 4.87 g of the dry chloromethylated copolymer. The heterogeneous mixture was heated to 120°C and held there for 3 hours. The solution was cooled and the excess 1,4-diaminobutane removed. The resin was stirred in 1N HCl, then washed with water, then stirred in 1N NaOH, then finally washed with water.

Example 4

A macroporous chloromethylated copolymer is prepared using the procedure described in British Patent No. 1,050,207. The copolymer is prepared employing divinylbenzene, isooctane diluent and styrene as starting materials.

To 555 g of 3,3'-iminobispropylamine which was warmed to 40°C was added 170.3 g of the dry chloromethylated copolymer. The temperature of the mixture increased to 100°C within five minutes and was held at 80—100°C for 2 hours. The solution was cooled and the excess amine removed. The resin was washed twice with methanol, then stirred in 1N HCl, then washed with water, then stirred in 1N NaOH then finally washed with water.

Example 5

A macroporous chloromethylated copolymer is prepared using the procedure described in British Patent No. 1,050,207. The copolymer is prepared employing divinylbenzene, isooctane diluent and styrene as starting materials.

To 200 g of technical grade 5,5-iminobishexylamine which was warmed to 40°C was added 60 g of the dry chloromethylated copolymer. The temperature of the mixture increased to 80°C within twenty minutes then was heated to 90°C and held there for 3 hours. The solution was cooled and the excess amine removed. The resin was washed with water, then stirred in 1N HCl, then washed with water, then stirred in 1N NaOH, then finally washed with water.

Example 6

A macroporous chloromethylated copolymer is prepared using the procedure described in British Patent No. 1,050,207. The copolymer is prepared employing divinylbenzene, isooctane diluent and styrene as starting materials.

To 86.5 g of 2,4-diamino-2-methylpentane which was warmed to 60°C was added 31.2 g of the dry chloromethylated copolymer. The temperature of the increased to 110°C within 5 minutes then was heated to 90°C for 3 hours. The solution was cooled, 98 g of water added then the solution removed. The resin was stirred in aqueous NaOH then washed with water.

Example 7

A macroporous chloromethylated copolymer is prepared using the procedure described in British Patent No. 1,050,207. The copolymer is prepared employing divinylbenzene, isooctane diluent and styrene as starting materials.

To 61.4 g of N,N-dimethyl-1,3-diaminopropane was added 6.0 g of the dry chloromethylated copolymer. The hetereogenerous mixture was heated to 75°C and held there for 2 hours. The solution was cooled and the excess amine removed. The resin was washed with water, stirred in 1N NaOH, then washed with water.

TABLE II

| Resin From Example # | Wet Volume Capacity (moles/l) Weak Base | Strong Base | Dry Capacity (moles/kg) | Water Retention Capacity (% $H_2O$) |
|---|---|---|---|---|
| 1 | 2.49 | 0.046 | 5.80 | 36.2 |
| 2 | 2.27 | 0.087 | 6.16 | 45.2 |
| 3 | 2.41 | 0.011 | 7.33 | |
| 4 | 2.10 | 0.010 | 6.62 | |
| 4 | 2.52 | 0.030 | 7.04 | 47.3 |
| 5 | 1.56 | 0.12 | 4.02 | 34.7 |
| 6 | 1.95 | 0.034 | 5.52 | 44.2 |
| 7 | 1.03 | 0.406 | 5.93 | 62.8 |

**Claims**

1. A polymer matrix comprising a weak base functionalities wherein said weak base functionalities are attached to said polymer matrix through a nitrogen atom of a 1,X-polyaminoalkylene amine functionality characterized in that:

a) the polymer matrix is a cross-linked copolymer of monovinyl aromatic compounds and polyvinyl compounds, and

b) said 1,X-polyaminoakylene amine is represented by the general formula:

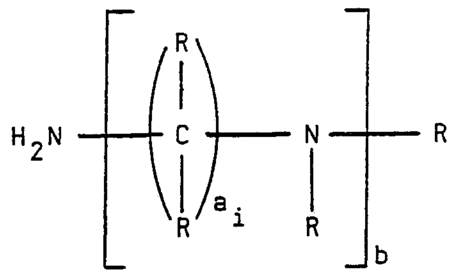

wherein 1 ≤i ≤ b; each R is independently at each occurence hydrogen, alkyl, alkylene amine, alkylene-hydroxyde or alkylene sulfide and when b is equal to one $a_i$ is 3 to 5; when b is greater than one $a_i$ is greater than or equal to 2 and at least one $a_i$ is 3 to 5.

2. A polymer matrix of claim 1 characterized in that said 1,X-polyaminoalkyleneamine is 1,3-diaminopropane.

3. A polymer matrix of Claim 1 characterized in that said 1,X-polyaminoalkyleneamine is 2,4-diamino-2-methylpentane.

4. A polymer matrix of Claim 1 characterized in that said 1,X-polyaminoalkyleneamine is 3,3'-iminobispropylamine.

5. A polymer matrix of Claim 1 characterized in that said 1,X-polyaminoalkyleneamine is 1,4-diaminobutane.

6. A process for preparing weak base ion exchange resin, comprising: contacting a cross-linked copolymer of monovinyl aromatic compounds and polyvinyl compounds and having pendent haloalkyl functionalities with a 1,X-polyaminoalkyleneamine; and polymerizing said polymer and 1,X-polyaminoalkyleneamine wherein said 1,X-polyaminoalkyleneamine is represented by the general formula:

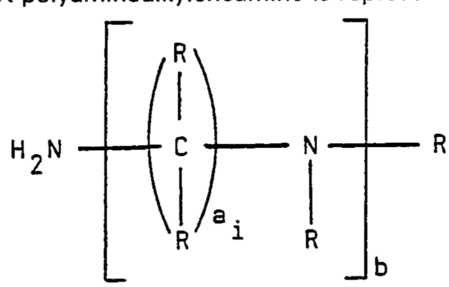

wherein 1 ≤i ≤ b; each R is independently at each occurence hydrogen, alkyl, alkylene amine, alkylene-hydroxyde or alkylene sulfide and when b is equal to one $a_i$ is 3 to 5; when b is greater than one $a_i$ is greater than or equal to 2 and at least one $a_i$ is 3 to 5.

**Patentansprüche**

1. Polymermatrix, umfassend schwach basische Funktionalitäten, worin die schwach basischen Funtionalitäten an die Polymermatrix durch ein Stickstoffatom einer 1,X-Polyaminoalkylenamin-Funktionalität gebunden sind, dadurch gekennzeichnet, daß:

a) die Polymermatrix ein quervernetztes Copolymer von monovinylaromatischen Verbindungen und polyvinylischen Verbindungen ist und

b) das 1,X-Polyaminoalkylenamin durch die allgemeine Formel dargestellt ist:

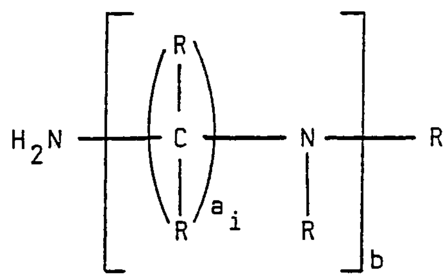

worin 1 ≤ i ≤ b; jeder R unabhängig bei jedem Auftreten Wasserstoff, Alkyl, Alkylenamin, Alkylenhydroxid oder Alkylensulfid ist, und wenn b gleich eins ist, $a_i$ 3 bis 5 ist; wenn b größer als eins ist, $a_i$ größer als oder gleich 2 ist und mindestens ein $a_i$ 3 bis 5 ist.

2. Polymermatrix nach Anspruch 1, dadurch gekennzeichnet, daß das 1,X-Polyaminoalkylenamin 1,3-Diaminopropan ist.

3. Polymermatrix nach Anspruch 1, dadurch gekennzeichnet, daß das 1,X-Polyaminoalkylenamin 2,4-Diamino-2-methylpentan ist.

4. Polymermatrix nach Anspruch 1, dadurch gekennzeichnet, daß das 1,X-Polyaminoalkylenamin 3,3'-Iminobispropylamin ist.

5. Polymermatrix nach Anspruch 1, dadurch gekennzeichnet, daß das 1,X-Polyaminoalkylenamin 1,4-Diaminobutan ist.

6. Verfahren zum Herstellen von schwach basischem Ionenaustauscherharz, umfassend: Kontaktieren eines quervernetzten Copolymers von monovinylaromatischen Verbindungen und polyvinylischen Verbindungen, das Haloalkyl-Seitenfunktionalitäten hat, mit einem 1,X-Polyaminoalkylenamin und Polymerisieren des Polymers und des 1,X-Polyaminoalkylenamins, worin das 1,X-Polyaminoalkylenamin durch die allgemeine Formel dargestellt ist:

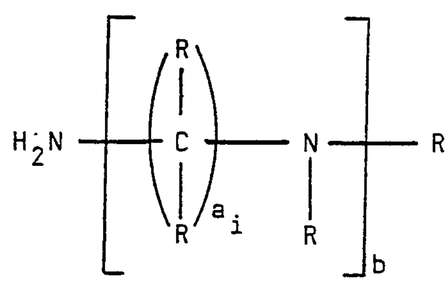

worin 1 ≤ i ≤ b; jeder R unabhängig bei jedem Auftreten Wasserstoff, Alkyl, Alkylenamin, Alkylenhydroxid oder Alkylensulfid ist, und wenn b gleich eins ist, $a_i$ 3 bis 5 ist; wenn b größer als eins ist, $a_i$ größer als oder gleich 2 ist und mindestens ein $a_i$ 3 bis 5 ist.

**Revendications**

1. Matrice polymère comportant des fonctions faiblement basiques, dans laquelle lesdites fonctions faiblement basiques sont liées à la matrice polymère par l'intermédiaire d'un atome d'azote d'un function 1,X-polyamino-alkylène-amine, caractérisée en ce que:

a) la matrice polymère est un copolymère réticulé de composé monovinyl-aromatiques et de composés polyvinyliques, et

b) ladite 1,X-polyamino-alkylène-amine est représentée par la formule générale

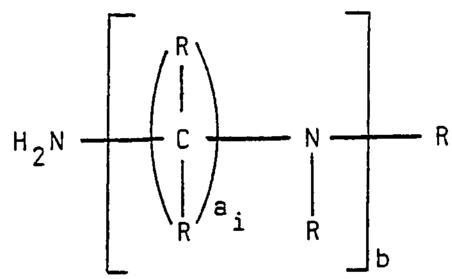

dans laquelle 1 ⩽ i ⩽ b; et chaque R représente indépendamment, en chaque occurence, un atome d'hydrogène ou un groupe alkyle, alkylène-amine, alkylène-hydroxyle ou alkylène-sulfure, et, quand b vaut 1, $a_i$ vaut de 3 à 5, quand b est supérieur à 1, $a_i$ est supérieur ou égal à 2 et au moins un $a_i$ vaut de 3 à 5.

2. Matrice polymère de la revendication 1, caractérisée en ce que ladite 1,X-polyamino-alkylène-amine est le 1,3-diaminopropane.

3. Matrice polymère de la revendication 1, caractérisée en ce que ladite 1,X-polyamino-alkylène-amine est le 2,4-diamino-2-méthylpentane.

4. Matrice polymère de la revendication 1, caractérisée en ce que ladite 1,X-polyamino-alkylène-amine est la 3,3'-imino-bis-propylamine.

5. Matrice polymère de la revendication 1, caractérisée en ce que ladite 1,X-polyamino-alkylène-amine est le 1,4-diaminobutane.

6. Procédé de préparation d'une résine échangeuse d'ions faiblement basique, comportant: la mise en contact d'un copolymère réticulé de composés monovinyl-aromatiques et de composés polvinyliques, présentant des fonctions latérales halogéno-alkylées, avec une 1,X-polyamino-alkylène-amine; et la polymérisation dudit polymère et de la 1,X-polyamino-alkylène-amine, ladite 1,X-polyamino-alkylène-amine étant représentée par la formule générale

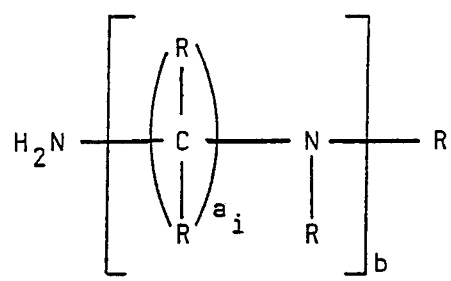

dans laquelle 1 ⩽ i ⩽ b; et chaque R représente indépendamment, en chaque occurence, un atome d'hydrogène ou un groupe alkyle, alkylène-amine, alkylène-hydroxyle ou alkylène-sulfure, et, quand b vaut 1, $a_i$ vaut de 3 à 5, quand b est supérieur à 1, $a_i$ est supérieur ou égal à 2 et au moins un $a_i$ vaut de 3 à 5.